# EUROPÄISCHE PATENTSCHRIFT

(11) **EP 1 125 774 B1**
(45) Veröffentlichungstag und Bekanntmachung des Hinweises auf die Patenterteilung: **19.11.2008**
(21) Anmeldenummer: 00117502.5
(22) Anmeldetag: 12.08.2000
(51) Int. Cl.: B60G 7/00, B60G 21/05, B62D 21/11, B60B 35/02, B21D 26/00, B21D 53/88, C21D 9/08

(54) **Fahrwerkskomponente für ein Kraftfahrzeug**
Motor vehicle suspension components
Composants de suspension de véhicules à moteur

(30) Priorität: 17.02.2000 DE 10007192
(43) Veröffentlichungstag der Anmeldung: 22.08.2001
(73) Patentinhaber: BENTELER AG, D-33104 Paderborn (DE)
(72) Erfinder: Wang, Shaolin, Dr.-Ing., 33098 Paderborn (DE); Christophliemke, Wigbert, Dipl.-Ing., 33758 Schloss Holte-Stukenbrock (DE)
(74) Vertreter: Griepenstroh, Jörg

(56) Entgegenhaltungen:
- EP-A- 0 092 815
- EP-A- 0 753 595
- EP-A- 0 760 265
- EP-A- 0 913 277
- EP-A- 1 160 108
- WO-A-98/41412
- DE-C- 19 941 993
- GB-A- 2 335 385
- US-A- 3 352 724
- US-A- 4 192 396
- US-A- 4 230 252
- US-A- 4 533 402
- PATENT ABSTRACTS OF JAPAN vol. 1998, no. 11, 30. September 1998 (1998-09-30) & JP 10 166823 A (TUBE FORMING:KK), 23. Juni 1998 (1998-06-23)
- PATENT ABSTRACTS OF JAPAN vol. 008, no. 032 (M-275), 10. Februar 1984 (1984-02-10) & JP 58 188531 A (NIHON HATSUJIYOU KK), 4. November 1983 (1983-11-04)

## Beschreibung

In der Kraftfahrzeugindustrie werden für Fahrwerkskomponenten wie Vorderachsen, Hinterachsen, Federlenker, Längslenker, Trapezlenker, Radträger, Querlenker und Spurstangen bislang bevorzugt Baustähle sowie Leichtmetallwerkstoffe, wie z.B. Aluminiumlegierungen, eingesetzt.

Hierbei stellen Baustähle einen Kompromiss zwischen der Umformbarkeit-auf die Herstellbarkeit der Fahrwerkskomponenten bezogen - und der Streckgrenze eines Werkstoffs - auf die Festigkeit und Steifigkeit der Endprodukte bezogen - dar, da mit steigender Streckgrenze im allgemeinen die Umformbarkeit des Werkstoffs verringert wird. Daraus folgt, dass höherfeste Stähle oftmals nur durch Warmumformung zu Endprodukten verarbeitet werden können. Höhere Anforderungen an Fahrwerkskomponenten werden aufgrund hoch belasteter Komponentenbereiche, beschränkter Einbauräume und/oder Gewichtsreduzierungen aber immer häufiger gestellt. Demzufolge werden die Geometrien der Fahrwerkskomponenten komplizierter und es sind höhere Umformbarkeiten bei der Fertigung bzw. Festigkeit, Steifigkeit und Energieaufnahme der Endprodukte erforderlich.

Aus der WO 98/41412 ist eine Achsschwinge zur beweglichen Anbringung von Rädern an einem Tragelement bekannt, die mindestens zwei hohle, über das Innenhochdruckumformverfahren gegebenenfalls mit sich ändernden Querschnitten hohl geformte Armteile aufweist, von denen einer eine Anschluss-Erhebung aufweist, die in den Endabschnitt des anderen Arms eingesteckt und darin befestigt ist.

Aus der GB 2 335 385 A zählt ein Werkzeug zur Innenhochdruckumformung zum Stand der Technik. Das Werkzeug umfasst mehrere Werkstückaufnahmen, so dass gleichzeitig mehrere Werkstücke erzeugt werden können, wie z.B. durch Innenhochdruckumformung hergestellte Lenker für Kraftfahrzeuge.

Aus der US 3 352 724 ist es bekannt, Chassiskomponenten eines Kraftfahrzeugs partiell zu vergüten, um die Betriebseigenschaften der Chassiskomponenten zu verbessern.

Der Erfindung liegt, ausgehend vom Stand der Technik, die Aufgabe zugrunde, einen Querlenker für ein Kraftfahrzeug zu schaffen, der bei höherer Festigkeit, Steifigkeit, Energieaufnahme und besserer Umformbarkeit dennoch gewichtsreduziert hergestellt werden kann.

Die Lösung dieser Aufgabe besteht nach der Erfindung in den im Patentanspruch 1 aufgeführten Merkmalen.

Ein Vorteil der Erfindung liegt darin, dass sich bei Einsatz von vergütbaren Stählen ein großes Einsparungspotenzial durch die Möglichkeit der Kaltumformung bietet. Aufgrund der bei der Kaltumformung erzielbaren hohen Umformbarkeit ist auch die Fertigung von Querlenkern komplexerer Geometrie möglich. Hinsichtlich ihres nach der partiellen Vergütung von Einzelteilen oder zusammengeschweißten Einzelteilen erreichten Festigkeits-, Steifigkeits- und Belastungsverhaltens sowie unter den Gesichtspunkten der Gewichtsoptimierung und Lebensdauer ist ein Querlenker gemäß der Erfindung besonders vorteilhaft. Er weist eine deutlich höhere Energieaufnahme als die bislang eingesetzten Querlenker auf. Die Umformbarkeit des Werkstoffs ist bei allen Gestaltungsvorgängen, wie z.B. Pressen, Biegen, Hydroformen usw. relativ hoch. Damit wird die Prozesssicherheit weiter stabilisiert. Es können stets gezielt die kritischen Stellen oder Bereiche des Querlenkers vergütet werden, welche gewährleisten, dass die Tragfähigkeit heraufgesetzt wird.

Durch den Einsatz von vergütbaren Stählen kann das Gewicht des Querlenkers um ca. bis 35 % gesenkt werden. Die tragbaren Belastungen erhöhen sich um ca. bis 100 %.

Der Querlenker kann aus miteinander verschweißten Pressteilen aus vergütbaren Stählen gebildet und vor oder nach dem Zusammenschweißen der Pressteile gezielt partiell vergütet sein.

Der Querlenker kann aus einem gezogenen oder geschweißten, gegebenenfalls mittels hydraulischem Innenhochdruck umgeformten, geprägten und geschnittenen sowie vergütbaren Stahlrohr gebildet und gezielt partiell vergütet sein.

Die Vergütung eines aus Pressteilen und/oder einem Stahlrohr bestehenden Querlenker erfolgt bevorzugt auf induktivem Wege (Patentanspruch 2).

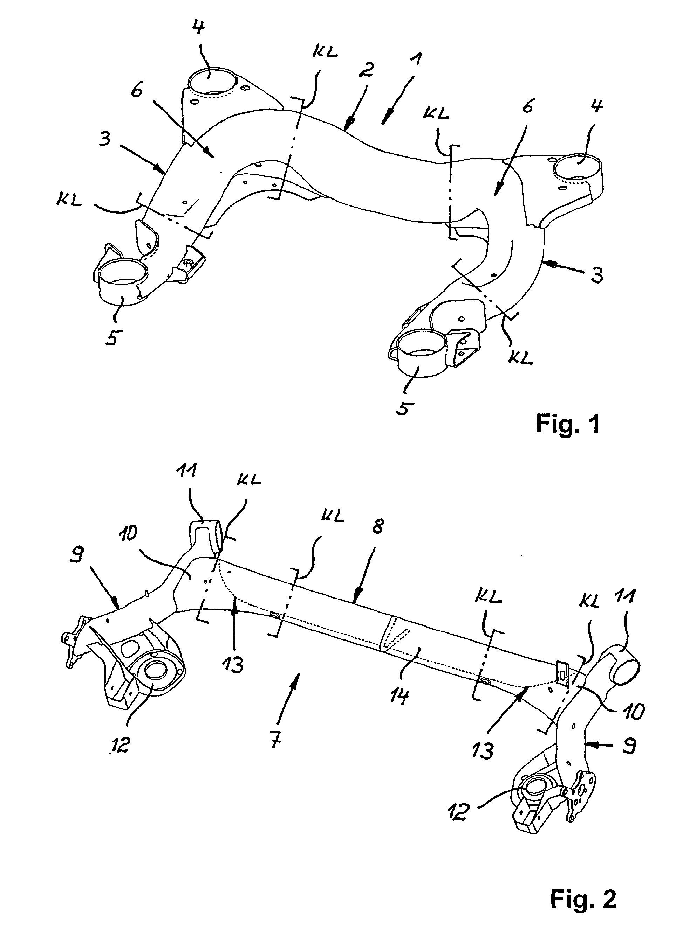

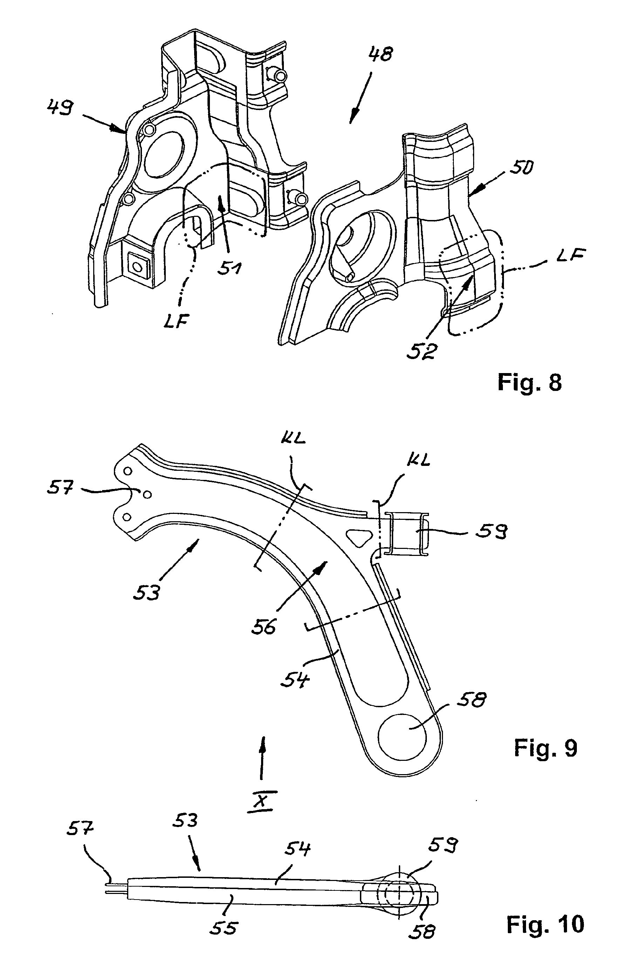

Die Erfindung ist nachfolgend anhand der in den Figuren 9 bis 17 schematisch dargestellten Ausführungsbeispiele näher erläutert. Die anderen nachfolgend beschriebenen Figuren 1 bis 8 und 18 bis 20 dienen lediglich zur Illustrierung der beanspruchten Erfindung und sind nicht Ausführungsformen der Erfindung, für die Schutz begehrt wird. Es zeigen:
- Figur 1: in der Perspektive eine Vorderachse (nicht Erfindungsgemäß);
- Figur 2: in der Perspektive eine Hinterachse (nicht Erfindungsgemäß);
- Figur 3: einen Federlenker in der Draufsicht;
- Figur 4: den Federlenker der Figur 3 in der Seitenansicht gemäß dem Pfeil IV;
- Figur 5: einen Längslenker in der Draufsicht;
- Figur 6: in der Perspektive einen Trapezlenker;
- Figur 7: in der Perspektive einen A-Querlenker;
- Figur 8: in der Perspektive die Ober- und Unterschalen eines Radträgers;
- Figur 9: in der Draufsicht einen Querlenker;
- Figur 10: eine Ansicht des Querlenkers der Figur 9 in Richtung des Pfeils X;
- Figur 11: in der Perspektive einen weiteren Querlenker;
- Figur 12: in der Draufsicht einen Querlenker gemäß einer dritten Ausführungsform;
- Figur 13: einen Querschnitt durch die Darstellung der Figur 12 entlang der Linie XIII-XIII;
- Figur 14: eine Seitenansicht auf den Querlenker der Figur 12 gemäß dem Pfeil XIV;
- Figur 15: in der Draufsicht einen Querlenker gemäß einer vierten Ausführungsform;
- Figur 16: einen Querschnitt durch die Darstellung der Figur 15 entlang der Linie XVI-XVI;
- Figur 17: eine Ansicht auf den Querlenker der Figur 15 gemäß dem Pfeil XVII;
- Figur 18: in der Draufsicht eine Spurstange;
- Figur 19: einen Querschnitt durch die Spurstange der Figur 18 entlang der Linie IXX-IXX und
- Figur 20: einen vertikalen Längsschnitt durch die Darstellung der Figur 18 entlang der Linie XX-XX.

Die Ausführungsformen, die in Figuren 1 und 2 gezeigt sind, bilden keinen Teil beanspruchten Erfindung.

In der Figur 1 ist mit 1 eine Fahrwerkskomponente in Form einer etwa U-förmigen Vorderachse mit einem Querträger 2 und zwei Längsträgern 3 bezeichnet, die aus einem Rohr hergestellt ist. Im Bereich des Querträgers 2 ist das Rohr durch hydraulischen Innenhochdruck in nicht näher dargestellter Weise umgeformt. Mit 4 und 5 sind die Anbindungen an die Karosserie bezeichnet.

Bei dieser Fahrwerkskomponente 1 werden die durch die eckigen Klammern KL eingegrenzten bogenförmigen Übergangsbereiche 6 zwischen dem Querträger 2 und den Längsträgern 3 vergütet.

Die Figur 2 zeigt eine Fahrwerkskomponente 7 in Form einer Hinterachse mit einem Querträger 8, der aus einem Rohr über den wesentlichen Teil seiner Länge V-förmig umgeformt ist. Auf diese Weise ist der Querträger 8 hier torsionsweich ausgebildet. Die mit den Längslenkern 9 verbundenen Enden 10 des Querträgers 8 sind hingegen torsionssteif ausgebildet. Die Anbindungen der Fahrwerkskomponente 7 an den Hilfsrahmen sind mit 11 und die Federaufnahmen mit 12 bezeichnet.

Bei dieser Fahrwerkskomponente 7 werden die ebenfalls durch eckige Klammern KL definierten Übergangsbereiche 13 zwischen dem torsionsweichen V-Längenabschnitt 14 des Querträgers 8 und den torsionssteifen Enden 10 vergütet.

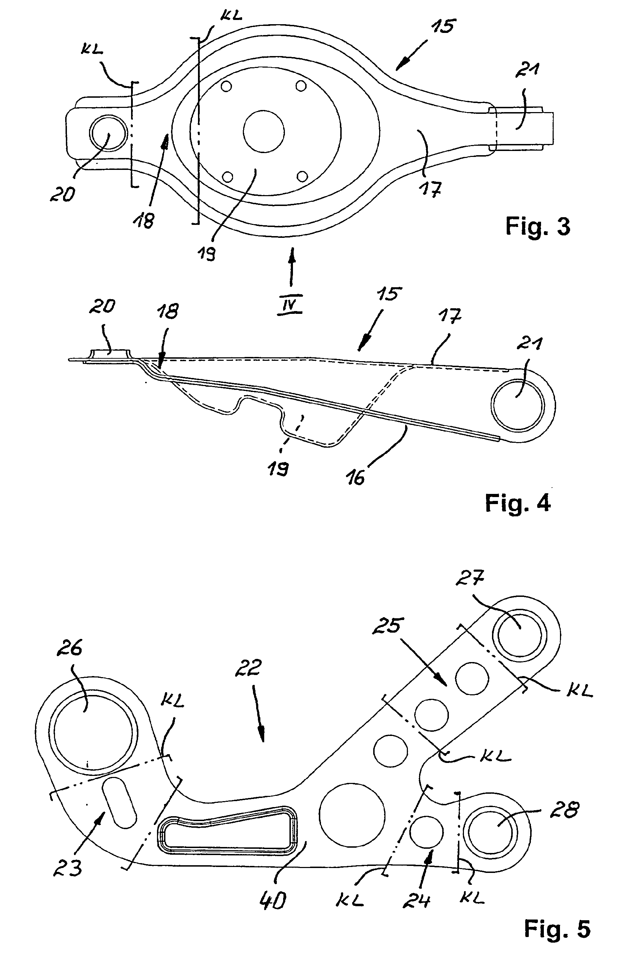

Die Figuren 3 und 4 zeigen eine Fahrwerkskomponente 15 in Form eines Federlenkers, der aus Pressteilen 16, 17 zusammengesetzt ist. Es ist zu sehen, dass hierbei der Übergangsbereich 18 von der muldenartigen Federaufnahme 19 auf die endseitige Aushalsung 20 zur Anbindung an den Radträger, gekennzeichnet durch die eckigen Klammern KL, vergütet ist. Mit 21 ist die Anbindung der Fahrwerkskomponente 15 an den Hilfsrahmen bezeichnet.

In der Figur 5 ist eine Fahrwerkskomponente 22 in Form eines Längslenkers aus nicht näher veranschaulichten Pressteilen 40 in der Draufsicht veranschaulicht. Bei dieser Fahrwerkskomponente 22 sind die durch eckige Klammern KL gekennzeichneten Bereiche 23-25 vergütet, um hier die Belastungsfähigkeit der Fahrwerkskomponente 22 zu erhöhen. Mit 26 ist die Anbindung der Fahrwerkskomponente 22 an die Karosserie und mit 27 sowie 28 sind die Anbindungen an den Radträger bezeichnet.

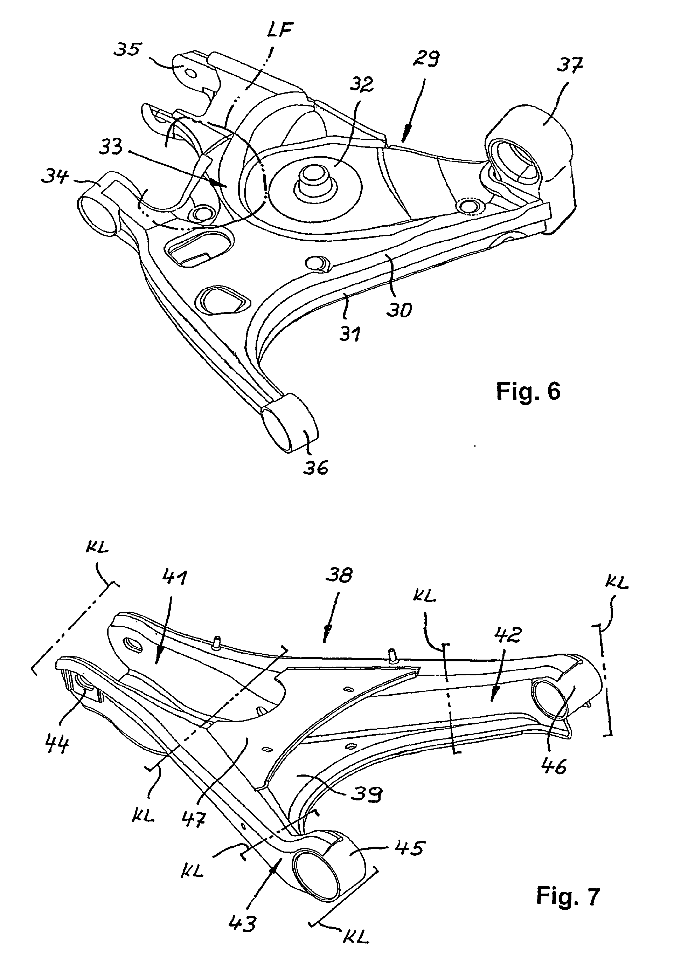

Bei der in der Figur 6 in der Perspektive dargestellten Fahrwerkskomponente 29 in Form eines Trapezlenkers, welcher aus Pressteilen 30, 31 zusammengesetzt ist, erfolgt eine Vergütung des an eine Federaufnahme 32 angrenzenden Bereichs 33, der hier durch eine strichpunktierte Linienführung LF dargestellt ist. Bei dieser Fahrwerkskomponente 29 sind die Anbindungen an den Radträger mit 34 und 35 und die Anbindungen an den Hilfsrahmen mit 36 und 37 bezeichnet.

Im Falle einer Fahrwerkskomponente 38 in Form eines A-Querlenkers aus Pressteilen 39, 47 entsprechend der Figur 7 werden die Endbereiche 41-43 der Fahrwerkskomponente 38, gekennzeichnet durch die eckigen Klammern KL, vergütet. Die Anbindung der Fahrwerkskomponente 38 an den Radträger ist hierbei mit 44 und die Anbindungen an den Hilfsrahmen sind mit 45 und 46 bezeichnet.

In der Figur 8 ist eine Fahrwerkskomponente 48 in Form eines Radträgers aus einer Oberschale 49 und einer Unterschale 50 veranschaulicht, wobei die beiden gepressten Schalen 49, 50 voneinander getrennt dargestellt sind. Es ist jedoch zu erkennen, dass in diesem Falle die hier einer höheren Beanspruchung ausgesetzten Bereiche 51, 52 der Schalen 49, 50, gekennzeichnet durch die strichpunktierten Linienführungen LF, vergütet werden.

Die Fahrwerkskomponente 53 in Form eines bogenförmigen Querlenkers aus Pressteilen 54, 55 entsprechend den Figuren 9 und 10 ist im mittleren Längenbereich 56, gekennzeichnet durch die eckigen Klammern KL, vergütet. Die Anbindung der Fahrwerkskomponente 53 an den Radträger ist mit 57 und die Anbindungen an den Hilfsrahmen sind mit 58 und 59 bezeichnet.

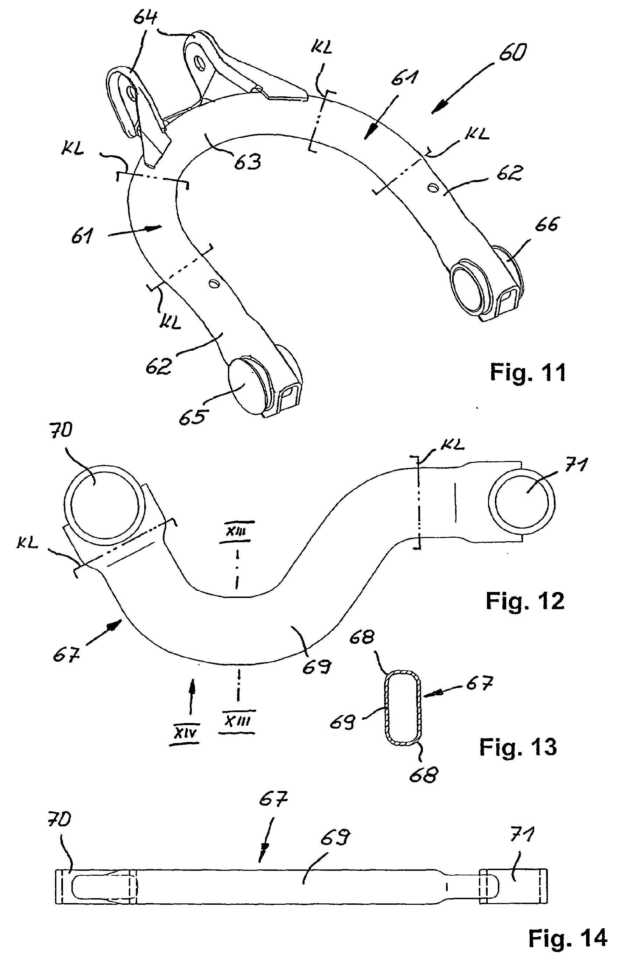

In der Figur 11 ist eine Fahrwerkskomponente 60 in Form eines aus einem Rohr umgeformten U-förmigen Querlenkers dargestellt. Diese Fahrwerkskomponente 60 wird in den Übergangsbereichen 61 von den Schenkeln 62 auf den Bogen 63 vergütet. Diese Übergangsbereiche 61 sind hier ebenfalls durch eckige Klammern KL gekennzeichnet. Die Anbindung der Fahrwerkskomponente 60 an den Radträger ist mit 64 und die Anbindungen an den Hilfsrahmen sind mit 65 und 66 bezeichnet.

Aus den Figuren 12 bis 14 geht eine Fahrwerkskomponente 67 in Form eines aus einem Rohr umgeformten Querlenkers hervor. Bei dieser Fahrwerkskomponente 67 ist der gesamte im Querschnitt zu einem Rechteck mit gerundeten Eckbereichen 68 umgeformte S-förmige mittlere Längenabschnitt 69, gekennzeichnet durch die eckigen Klammern KL, vergütet. Die Anbindung der Fahrwerkskomponente 67 an den Hilfsrahmen ist mit 70 und die Anbindung an den Radträger mit 71 bezeichnet.

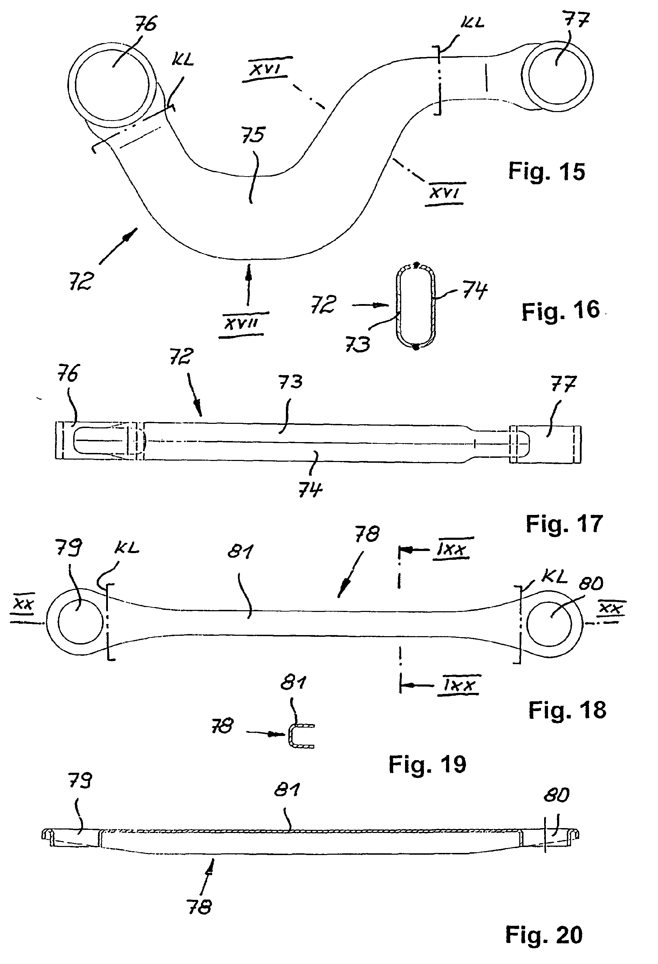

Auch die in den Figuren 15 bis 17 veranschaulichte Fahrwerkskomponente 72 in Form eines Querlenkers, der aus miteinander verbundenen Pressteilen 73, 74 besteht, ist in dem im Querschnitt rechteckig ausgebildeten S-förmigen mittleren Längenabschnitt 75, gekennzeichnet durch die eckigen Klammern KL, vergütet. Die Anbindung der Fahrwerkskomponente 72 an den Hilfsrahmen ist mit 76 und die Anbindung an den Radträger ist mit 77 bezeichnet.

Schließlich veranschaulichen die Figuren 18 bis 20 eine Fahrwerkskomponente 78 in Form einer aus einem Pressteil gebildeten Spurstange, welche zwischen den beiden endseitigen Aushalsungen 79, 80 vergütet ist. Dieser im Querschnitt U-förmige Bereich 81 ist durch die eckigen Klammern KL gekennzeichnet. Die Aushalsung 79 dient der Anbindung an den Hilfsrahmen und die Aushalsung 80 der Anbindung an den Radträger.

### Bezugszeichenaufstellung

- 1 -: Fahrwerkskomponente
- 2 -: Querträger v. 1
- 3 -: Längsträger v. 1
- 4 -: Anbindungen v. 1
- 5 -: Anbindungen v. 1
- 6 -: Übergangsbereiche zw. 2 u. 3
- 7 -: Fahrwerkskomponente
- 8 -: Querträger v. 7
- 9 -: Längsträger v. 7
- 10 -: Enden v. 8
- 11 -: Anbindungen v. 7
- 12 -: Federaufnahmen v. 7
- 13 -: Übergangsbereiche zw. 10 u. 14
- 14 -: Längenabschnitt v. 8
- 15 -: Fahrwerkskomponente
- 16 -: Pressteil v. 15
- 17 -: Pressteil v. 15
- 18 -: Übergangsbereich v. 19 auf 20
- 19 -: Federaufnahme v. 15
- 20 -: Aushalsung v. 15
- 21 -: Anbindung v. 15
- 22 -: Fahrwerkskomponente
- 23 -: Vergütungsbereich v. 22
- 24 -: Vergütungsbereich v. 22
- 25 -: Vergütungsbereich v. 22
- 26 -: Anbindung v. 22
- 27 -: Anbindung v. 22
- 28 -: Anbindung v. 22
- 29 -: Fahrwerkskomponente
- 30 -: Pressteil v. 29
- 31 -: Pressteil v. 29
- 32 -: Federaufnahme v. 29
- 33 -: Vergütungsbereich
- 34 -: Anbindung v. 29
- 35 -: Anbindung v. 29
- 36 -: Anbindung v. 29
- 37 -: Anbindung v. 29
- 38 -: Fahrwerkskomponente
- 39 -: Pressteil v. 38
- 40 -: Pressteile v. 22
- 41 -: Endbereich v. 38
- 42 -: Endbereich v. 38
- 43 -: Endbereich v. 38
- 44 -: Anbindung v. 38
- 45 -: Anbindung v. 38
- 46 -: Anbindung v. 38
- 47 -: Pressteil v. 38
- 48 -: Fahrwerkskomponente
- 49 -: Oberschale v. 48
- 50 -: Unterschale v. 48
- 51 -: Bereich v. 49
- 52 -: Bereich v. 50
- 53 -: Fahrwerkskomponente
- 54 -: Pressteil v. 53
- 55 -: Pressteil v. 53
- 56 -: Längenbereich v. 53
- 57 -: Anbindung v. 53
- 58 -: Anbindung v. 53
- 59 -: Anbindung v. 53
- 60 -: Fahrwerkskomponente
- 61 -: Übergangsbereich v. 60
- 62 -: Schenkel v. 60
- 63 -: Bogen v. 60
- 64 -: Anbindungen v. 60
- 65 -: Anbindungen v. 60
- 66 -: Anbindungen v. 60
- 67 -: Fahrwerkskomponente
- 68 -: Eckbereiche v. 69
- 69 -: mittlerer Längenabschnitt v. 67
- 70 -: Anbindung v. 67
- 71 -: Anbindung v. 67
- 72 -: Fahrwerkskomponente
- 73 -: Pressteil v. 72
- 74 -: Pressteil v. 72
- 75 -: mittlerer Längenabschnitt v. 72
- 76 -: Anbindung v. 72
- 77 -: Anbindung v. 72
- 78 -: Fahrwerkskomponente
- 79 -: Aushalsung v. 78
- 80 -: Aushalsung v. 78
- 81 -: Bereich v. 78

- KL -: Klammern
- LF -: Linienführungen

## Patentansprüche

1. Querlenker für ein Kraftfahrzeug, in Form einer zumindest teilweise hohlen, bogenförmigen Stahl-Konfiguration, **dadurch gekennzeichnet, dass** er entweder aus gepressten, miteinander verschweißten Teilen (54, 55) aus vergütbaren Stählen gebildet ist, wobei die Teile (54, 55) vor oder nach dem Zusammenschweißen partiell vergütet sind, oder aus einem entweder gezogenen oder geschweißten, gegebenenfalls mittels hydraulischem Innenhochdruck umgeformten, geprägten, geschnittenen und partiell vergüteten Stahlrohr gebildet ist.

2. Querlenker nach Anspruch 1, **dadurch gekennzeichnet, dass** er durch einen induktiv vergütbaren Stahl gebildet ist.

## Claims

1. Transverse link for a motor vehicle, in the form of an at least partially hollow, curved steel configuration, **characterized in that** said transverse link is formed either from pressed parts (54, 55) which are composed of heat-treatable steels and which are welded to one another, with the parts (54, 55) being partially heat-treated before or after being welded together, or from a steel tube which is either drawn or welded, which is if appropriate deformed by means of a hydraulic internal high pressure, and which is embossed, cut and partially heat-treated.

2. Transverse link according to Claim 1, **characterized in that** it is formed from a steel which can be inductively heat-treated.

## Revendications

1. Bras de suspension pour un véhicule automobile sous la forme d'une configuration métallique arquée, au moins partiellement creuse, **caractérisé en ce qu'**il est constitué d'éléments (54, 55) pressés, soudés ensemble en aciers aptes au traitement par trempe et revenu, les éléments (54, 55) étant trempés et revenus partiellement avant ou après le soudage, ou d'un tube d'acier étiré ou soudé, éventuellement mis en forme au moyen de la haute pression interne hydraulique, estampé, coupé et partiellement trempé et revenu.

2. Bras de suspension selon la revendication 1, **caractérisé en ce qu'**il est constitué d'un acier apte au traitement par trempe et revenu de manière inductive.
